# EUROPÄISCHE PATENTSCHRIFT

(11) **EP 1 431 780 B1**
(45) Veröffentlichungstag und Bekanntmachung des Hinweises auf die Patenterteilung: **05.06.2013**
(21) Anmeldenummer: 03028406.1
(22) Anmeldetag: 11.12.2003
(51) Int. Cl.: G01V 8/12, G01V 8/14

(54) **Blende für einen optischen Sensor**
Diaphragm for optical sensor
Diaphragme pour capteur optique

(30) Priorität: 21.12.2002 DE 10260512
(43) Veröffentlichungstag der Anmeldung: 23.06.2004
(73) Patentinhaber: Diehl AKO Stiftung & Co. KG, 88239 Wangen (DE)
(72) Erfinder: Arnold, Georg, 91126 Schwabach (DE); Wiekenberg, Günther, 90513 Zirndorf (DE)
(74) Vertreter: Diehl Patentabteilung

(56) Entgegenhaltungen:
- DE-A1- 19 708 083
- DE-B- 1 233 779
- FR-A- 2 588 385
- US-A- 3 842 263
- US-A- 5 811 798
- PATENT ABSTRACTS OF JAPAN Bd. 008, Nr. 109 (P-275), 22. Mai 1984 (1984-05-22) -& JP 59 018474 A (EPUSON KK), 30. Januar 1984 (1984-01-30)

## Beschreibung

Die Erfindung betrifft eine berührungsempfindliche Sensorbaugruppe mit einem optischen Sensor nach dem Oberbegriff des Patentanspruchs 1.

In Elektrokochherden werden Herdsteuerungen verwendet, die berührungsempfindliche Sensoren mit Infrarot-Sendern und -Empfängern aufweisen, welche unterhalb einer Glaskeramik-Kochplatte angeordnet sind. Bei Betätigung des Tastsensors durch Auflegen eines Fingers auf der Glaskeramikoberfläche oberhalb des Sensors wird die vom Sender ausgehende IR-Strahlung verstärkt zum Empfänger reflektiert, wodurch z.B. ein Schaltvorgang ausgelöst wird.

Um Störungen durch Streu- bzw. Umgebungslicht zu verringern oder auch ganz zu vermeiden, werden auf die Sensoren Blendenrahmen gesteckt, die die Sensoren seitlich umschließen und auf ihrer Oberseite jeweils eine Öffnung für den Sender und den Empfänger zum Durchtritt der IR-Strahlung aufweisen. Diese Öffnungen sind oft derart gestaltet, dass das vom Sender ausgesandte IR-Licht durch die erste Öffnung in die Glaskeramikplatte gelangt, dort an der vom Sensor abgewandten Oberseite der Glaskeramikplatte reflektiert und durch die zweite Öffnung zum Empfänger gelangt. Dadurch liegt am Empfängerausgang stets ein gewisser Signalpegel an, selbst wenn der Tastsensor nicht betätigt wird. Dieser "Grundpegel" kann jedoch in einer Sensorauswerteschaltung berücksichtigt und herausgerechnet werden, so dass tatsächlich nur bei einer Betätigung des Tastsensors durch eine entsprechende Signalpegelerhöhung ein Schaltsignal erzeugt wird.

Befindet sich nun aber eine Flüssigkeit wie z.B. Wasser auf der Oberseite der Glaskeramikplatte oberhalb des Tastsensors, wird deutlich weniger Licht an der Glaskeramikoberseite reflektiert, so dass der Grundpegel sinkt oder gar vollständig verschwindet. Auch diese Absenkung des Grundpegels kann und muss in der Auswerteschaltung berücksichtigt werden. Wird nun allerdings die Flüssigkeit mit einem Tuch schnell weggewischt, steigt der Grundpegel genauso schnell wieder an. Dieser schnelle Pegelanstieg ist von einer Betätigung des Tastsensors nicht zu unterscheiden, so dass hierdurch ein (andauerndes) Schaltsignal erzeugt wird. Dies ist unerwünscht.

Somit stellt sich der Erfindung die Aufgabe, eine gattungsgemäße Sensorbaugruppe derart weiterzuentwickeln, dass eine Schaltfunktion beim Wegwischen von Flüssigkeiten oberhalb des Sensors verhindert wird.

Diese Aufgabe wird durch eine berührungsempfindliche Sensorbaugruppe mit den Merkmalen des Patentanspruchs 1 gelöst. Die abhängigen Ansprüche beschreiben vorteilhafte Ausgestaltungen und Weiterbildungen der Erfindung.

Das Hineinragen des zwischen den beiden Öffnungen in der Blende befindlichen lichtundurchlässigen Stegs in den direkten optischen Weg vom Sender über die von dem Sensor abgewandte Oberseite der Platte zum Empfänger bewirkt, dass das vom Sender ausgesandte Licht nicht mehr über eine Reflexion an der Oberseite der Platte zum Empfänger gelangen kann, und somit zu einer deutlichen Absenkung bzw. einem Verschwinden des Grund-Signalpegels. Somit sinkt dieser Grundpegel beim Vorhandensein einer Flüssigkeit auf der Plattenoberseite nicht mehr weiter ab, weshalb er auch beim Wegwischen dieser Flüssigkeit nicht mehr sprunghaft ansteigen kann. Damit ist die fehlerhafte Erzeugung eines Schaltsignals beim Wegwischen von Flüssigkeit auf der Oberfläche der Platte oberhalb des Sensors wirkungsvoll verhindert. Bei einer Betätigung des Tastschalters durch Auflegen eines Fingers auf die Plattenoberseite gelangt durch diffuse und möglicherweise auch mehrfache Reflexion im Finger trotzdem genügend Licht zum Empfänger, so dass ein Tastendruck sicher erkannt werden kann.

Das Hineinragen des Steges in den genannten optischen Weg kann dadurch bewerkstelligt sein, dass dieser Steg entsprechend breit ausgeführt ist. Dies hat jedoch zur Folge, dass auch die Signalstärke bei einer Betätigung des Tastsensors verringert wird.

Deshalb weist der Steg in einer vorteilhaften Ausgestaltung der Erfindung mindestens eine Nase auf, welche in den genannten optischen Weg hineinragt. Diese Nase liegt somit auf der optischen Achse zwischen Sender und Empfänger. Sie kann oberhalb des Senders und/oder oberhalb des Empfängers angeordnet sein.

Gemäß der Erfindung kann die Blende auch in Form eines Blendenrahmens ausgeführt werden, welcher den Sensor seitlich umschließt und dessen Oberseite die durch den genannten Steg getrennten Lichtdurchtrittsöffnungen aufweist.

In Weiterbildung der Erfindung ist an den Steg eine lichtundurchlässige Trennwand angeformt, welche einen ersten Raum, der den Sender enthält, von einem zweiten Raum, der den Empfänger enthält, trennt. Die Trennwand kann eine lichtdurchlässige Öffnung, vorzugsweise einen Schlitz aufweisen.

Die erfindungsgemäße Sensorbaugruppe kann in einer berührungsempfindlichen Kochherdsteuerung eingebaut sein, welche wiederum Teil eines Kochherds mit einer für Licht zumindest teilweise durchlässigen Herdplatte (insbesondere einer Glaskeramik-Kochplatte) sein kann.

Anhand der Zeichnungen wird im Folgenden ein Ausführungsbeispiel der Erfindung näher erläutert. Es zeigen:

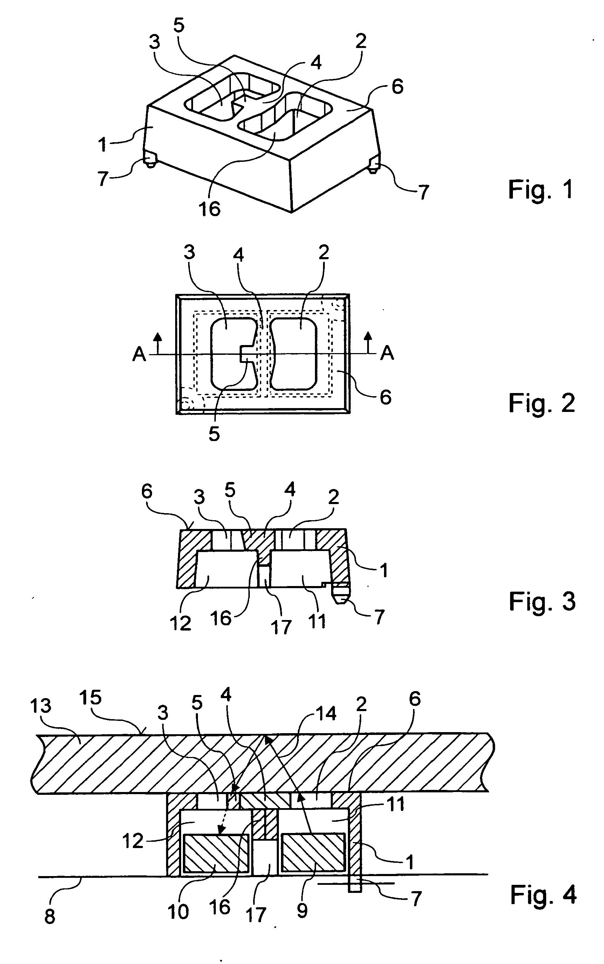

- Figur 1: eine Blende in Form eines Blendenrahmens in perspektivischer Darstellung,
- Figur 2: den Blendenrahmen in Aufsicht,
- Figur 3: den Blendenrahmen im Querschnitt entlang der Linie A-A in Figur 2,
- Figur 4: eine berührungsempfindliche Sensorbaugruppe in prinzipieller Darstellung im Querschnitt und

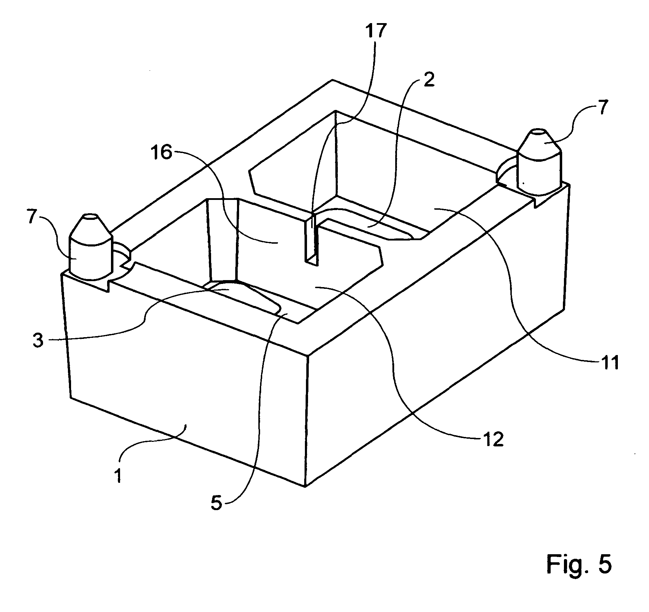

- Figur 5: den Blendenrahmen in perspektivischer Ansicht von unten.

Ein Blendenrahmen 1 weist in seiner Oberseite 6 zwei Öffnungen 2 und 3 auf, welche durch einen Steg 4 voneinander getrennt sind. In die Öffnung 3 ragt eine Nase 5, welche an dem Steg 4 angeformt ist. Der Blendenrahmen 1 ist aus einem für Infrarot-Licht undurchsichtigen Material geformt. Mit Füßen 7 kann der Blendenrahmen durch Löcher in einer Leiterplatte 8 zur Befestigung auf dieser eingesteckt werden.

Auf der Leiterplatte 8 sind ein Infrarot-Sender 9 und ein Infrarot-Empfänger 10 angeordnet und mit einer (nicht gezeigten) Sensorauswerteschaltung verschaltet. Der Blendenrahmen 1 ist derart über den Infrarot-Sender 9 und den Infrarot-Empfänger 10 gestülpt, dass diese innerhalb getrennter, Hohlräume 11 und 12 bildender Räume unterhalb der Blendenöffnungen 2 bzw. 3 angeordnet sind. Direkt oberhalb der Oberseite 6 des Blendenrahmens 1 liegt eine Glaskeramikplatte 13, welche die Kochplatte eines Haushalts-Elektrokochherdes darstellt.

Durch die an dem Steg 4 angebrachte Nase 5 wird verhindert, dass von dem Infrarot-Sender 9 ausgehendes Licht entlang dem optischen Weg 14 über eine Reflexion an der Oberseite 15 der Glaskeramikplatte 13 zum Infrarot-Empfänger 10 gelangen kann.

Bei einer Betätigung dieses berührungsempfindlichen Sensors mittels eines auf die Oberfläche 15 der Glaskeramikplatte 13 aufgelegten Fingers wird Licht nicht mehr nur an der Glaskeramikplatten-Oberseite 15, sondern auch im berührenden Finger diffus und auch mehrfach gestreut, so dass genügend Streulicht auf den Infrarot-Empfänger 10 fällt und dieser eine Schaltfunktion auslösen kann.

Die Form der Öffnungen 2 und 3 bzw. des sie trennenden Steges 4 mit der Nase 5 ist derart gewählt, dass der optische Weg 14 unterbrochen, daneben aber möglichst viel Licht durchgelassen wird.

Die Nase 5 kann auch derart ausgeformt sein, dass sie einen quer zum Steg 4 verlaufenden Längssteg durch die Öffnung 3 bildet.

Eine entsprechende Nase kann alternativ oder auch zusätzlich in die andere Öffnung 2 hineinragend ausgeformt sein und auch dort einen Längssteg bilden.

Der Steg 4 ist dort, wo keine Nase 5 an ihm angeordnet ist, verjüngt ausgebildet, um möglichst große Öffnungen 2 und 3 zu erhalten.

An den Steg ist eine Trennwand 16 aus einem für Infrarot-Licht undurchsichtigen Material angeformt. Die Trennwand 16 trennt den Hohlraum 11, in dem der Sender 9 angeordnet ist, von dem Hohlraum 12, in dem der Empfänger 10 angeordnet ist und verhindert so den Übertritt von Streulicht vom Sender 9 zum Empfänger 10 innerhalb des Blendenrahmens 1.

Jedoch weist die Trennwand 16 einen Schlitz 17 auf, welcher den Durchtritt einer geringen Menge von Streulicht aus dem Hohlraum 11 mit dem Sender 9 in den Hohlraum 12 mit dem Empfänger 10 zulässt. Diese geringe Menge an Streulicht, mit welcher der Empfänger 10 prüfen kann, ob der Sender 9 momentan gerade Licht aussendet, ist gewünscht, da auf diese Weise besser unterschieden werden kann, ob das durch die Blendenöffnung 3 auf den Empfänger 10 fallende Licht tatsächlich vom Sender 9 ausgestrahltes und reflektiertes Licht ist (also nur dann empfangen wird, wenn der Sender 9 auch Licht aussendet) oder von einer Fremdlichtquelle stammt (also auch dann empfangen wird, wenn der Sender 9 gar kein Licht aussendet).

## Patentansprüche

1. Berührungsempfindliche Sensorbaugruppe, mit einer für Licht zumindest teilweise durchlässigen Platte (13), einem optischen Sensor, der einen Sender (9) und einen Empfänger (10) enthält und unterhalb oder hinter der Platte (13) angeordnet ist, und einer Blende (6), die zwei voneinander getrennte Öffnungen (2, 3) zum Durchtritt von Licht aufweist, von denen die erste (2) zwischen dem Sender (9) und der Platte (13) und die zweite (3) zwischen dem Empfänger (10) und der Platte (13) angeordnet ist, so dass das von dem Sender (9) ausgestrahlte Licht durch die erste Öffnung (2) der Blende (6) in die Platte (13) gelangt, an der dem Sensor abgewandten Oberseite (15) der Platte (13) reflektiert und durch die zweite Öffnung (3) der Blende (6) zum Empfänger (10) des Sensors gelangt,
**dadurch gekennzeichnet,**
**dass** die Blende zwischen den Öffnungen (2, 3) mit einem lichtundurchlässigen Steg (4) derart ausgeformt ist, dass er in den direkten optischen Weg (14) vom Sender (9) durch die Platte (13) bis zu der dem Sensor abgewandten Oberseite (15) der Platte (13) und von dieser zurück zum Empfänger (10) hineinragt.

2. Berührungsempfindliche Sensorbaugruppe nach Anspruch 1,
**dadurch gekennzeichnet,**
**dass** der Steg (4) mindestens eine Nase (5) aufweist, die in den genannten optischen Weg (14) hineinragt.

3. Berührungsempfindliche Sensorbaugruppe nach Anspruch 1 oder 2,
**dadurch gekennzeichnet,**
**dass** der Steg (4) oder die Nase (5) zwischen dem Sender (9) und der Platte (13) in den genannten optischen Weg (14) hineinragt.

4. Berührungsempfindliche Sensorbaugruppe nach einem der Ansprüche 1 bis 3,
**dadurch gekennzeichnet,**
**dass** der Steg (4) oder die Nase (5) zwischen dem Empfänger (10) und der Platte (13) in den genannten optischen Weg (14) hineinragt.

5. Berührungsempfindliche Sensorbaugruppe nach einem der vorherigen Ansprüche,
**dadurch gekennzeichnet,**
**dass** die Blende (1) in Form eines Blendenrahmens (1) ausgeführt ist, welcher den Sensor seitlich umschließt und dessen Oberseite die durch den genannten Steg (4) getrennten Lichtdurchtrittsöffnungen (2, 3) aufweist.

6. Berührungsempfindliche Sensorbaugruppe nach einem der vorherigen Ansprüche,
**dadurch gekennzeichnet,**
**dass** an den Steg (4) eine lichtundurchlässige Trennwand (16) angeformt ist, welche einen ersten, den Sender (9) enthaltenden Raum (11) von einem zweiten, den Empfänger (10) enthaltenden Raum (12) trennt.

7. Berührungsempfindliche Sensorbaugruppe nach Anspruch 6,
**dadurch gekennzeichnet,**
**dass** die Trennwand (16) eine lichtdurchlässige Öffnung, vorzugsweise einen Schlitz (17) aufweist.

## Claims

1. Touch-sensitive sensor assembly, having a plate (13) that is at least partially transmissive to light, an optical sensor, which contains a transmitter (9) and a receiver (10) and is arranged below or behind the plate (13), and a diaphragm (6), which has two mutually separate openings (2, 3) for the passage of light, of which the first opening (2) is arranged between the transmitter (9) and the plate (13), and of which the second opening (3) is arranged between the receiver (10) and the plate (13), such that the light emitted by the transmitter (9) passes through the first opening (2) of the diaphragm (6) into the plate (13), is reflected at the upper side (15) of the plate (13) that is remote from the sensor, and passes through the second opening (3) of the diaphragm (6) to the receiver (10) of the sensor,
**characterized in that**
the diaphragm between the openings (2, 3) is formed with an opaque crosspiece (4) such that it protrudes into the direct optical path (14) from the transmitter (9) through the plate (13) up to the upper side (15) of the plate (13) that is remote from the sensor and back therefrom to the receiver (10).

2. Touch-sensitive sensor assembly according to Claim 1,
**characterized in that**
the crosspiece (4) has at least one nose (5) which protrudes into said optical path (14).

3. Touch-sensitive sensor assembly according to Claim 1 or 2,
**characterized in that**
the crosspiece (4) or the nose (5) protrudes into said optical path (14) between the transmitter (9) and the plate (13).

4. Touch-sensitive sensor assembly according to one of Claims 1 to 3,
**characterized in that**
the crosspiece (4) or the nose (5) protrudes into said optical path (14) between the receiver (10) and the plate (13).

5. Touch-sensitive sensor assembly according to one of the preceding claims,
**characterized in that**
the diaphragm (1) is configured in the form of a diaphragm frame (1), which laterally encloses the sensor and the upper side of which has the light passage openings (2, 3) that are separated by said crosspiece (4).

6. Touch-sensitive sensor assembly according to one of the preceding claims,
**characterized in that**
an opaque separating wall (16) is moulded on the crosspiece (4), which separates a first space (11) which contains the transmitter (9) from a second space (12) which contains the receiver (10).

7. Touch-sensitive sensor assembly according to Claim 6,
**characterized in that**
the separating wall (16) has a light-transmissive opening, preferably a slit (17).

## Revendications

1. Ensemble capteur tactile comportant une plaque au moins partiellement transparente à la lumière (13), un capteur optique qui contient un émetteur (9) et un récepteur (10) et est disposé en-dessous ou à l'arrière de la plaque (13), et un diaphragme (6) qui comprend deux ouvertures (2, 3) séparées l'une de l'autre pour le passage de la lumière, dont la première (2) est disposée entre l'émetteur (9) et la plaque (13) et dont la seconde (3) est disposée entre le récepteur (10) et la plaque (13) de manière à ce que la lumière rayonnée par l'émetteur (9) atteigne, à travers la première ouverture (2) du diaphragme (6) la plaque (13), soit réfléchie sur la face supérieure (15) de la plaque (13) qui est opposée au capteur, et atteigne le récepteur (10) à travers la seconde ouverture (3) du diaphragme (6),
**caractérisé en ce que** le diaphragme est pourvu d'une bande non transparente à la lumière (4) entre les ouvertures (2, 3) de telle manière que la bande pénètre dans le chemin optique (14) direct allant de l'émetteur (9), à travers la plaque (13), jusqu'à la face supérieure (15) de la plaque (13) qui est opposée au capteur et, revenant de là, vers le récepteur (10).

2. Ensemble capteur tactile selon la revendication 1, **caractérisé en ce que** la bande (4) présente au moins une patte (5) qui pénètre dans ledit chemin optique (14).

3. Ensemble capteur tactile selon la revendication 1 ou 2, **caractérisé en ce que** la bande (4) ou la patte (5) pénètre dans ledit chemin optique (14) entre l'émetteur (9) et la plaque (13).

4. Ensemble capteur tactile selon l'une quelconque des revendications 1 à 3, **caractérisé en ce que** la bande (4) ou la patte (5) pénètre dans ledit chemin optique (14) entre le récepteur (10) et la plaque (13).

5. Ensemble capteur tactile selon l'une quelconque des revendications précédentes, **caractérisé en ce que** le diaphragme (1) est réalisé sous la forme d'un cadre de diaphragme (1) qui entoure latéralement le capteur et dont la face supérieure comprend les ouvertures de passage de lumière (2, 3) séparées par ladite bande (4).

6. Ensemble capteur tactile selon l'une quelconque des revendications précédentes, **caractérisé en ce que** sur la bande (4) est formée une paroi de séparation opaque à la lumière (16) qui sépare un premier espace (11) contenant l'émetteur (9) d'un second espace (12) contenant le récepteur (10).

7. Ensemble capteur tactile revendication 6, **caractérisé en ce que** la paroi de séparation (16) comprend une ouverture transparente à la lumière, de préférence une fente (17).
